(19) Europäisches Patentamt
European Patent Office
Office européen des brevets

(11) **EP 1 816 535 B1**

(12) **EUROPEAN PATENT SPECIFICATION**

(45) Date of publication and mention
of the grant of the patent:
**29.07.2009 Bulletin 2009/31**

(51) Int Cl.:
***G05B 23/02*** *(2006.01)*

(21) Application number: **07001295.0**

(22) Date of filing: **22.01.2007**

(54) **Preprocessing data on sensor device**

Vorverarbeitung von Daten auf einer Sensorvorrichtung

Données prétraitées d'un dispositif de capteur

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.02.2006 US 346633**

(43) Date of publication of application:
**08.08.2007 Bulletin 2007/32**

(73) Proprietor: **SAP AG**
**69190 Walldorf (DE)**

(72) Inventors:
• **Bornhoevd, Christof**
  **Belmont, CA 94002 (US)**
• **Suenbuel, Asuman**
  **San Jose, CA 95127 (US)**

(74) Representative: **Hössle Kudlek & Partner**
**Patentanwälte**
**Postfach 10 23 38**
**70019 Stuttgart (DE)**

(56) References cited:
**US-A1- 2004 199 368     US-B1- 6 865 509**

**Description**

**Technical Field of the Invention**

The description relates to processing data on a sensor device.

**Background**

Systems exist for integrating data acquisition devices such as environmental devices or radiofrequency identification (RFID) tag readers with enterprise software applications that make use of the collected data. The processing of sensor data in such integration systems typically takes place at different system levels on top of the actual sensor devices. For this, the sensor devices always need to send all raw sensor data to the integration system via some form of network.

This requires significant network resources to transmit data even if it is, for example, filtered out in the integration system. This problem is even more severe for environmental sensors, that unlike RFID readers usually emit a periodic stream of sensor readings, e.g. every n seconds. For example, temperature sensors generally emit a continuous stream of temperature values, perhaps one every few milliseconds. The enterprise applications, however, may not be interested in the individual temperature values and may only be interested in higher-level events like the sudden rise of temperature in a refrigeration unit. Such an exceptional situation can now be determined directly on the sensor device and only a "temperature to high" event needs to be signaled from the sensor devices to the integration system. There exists sensor devices, so-called Motes or Smart Its, that in addition to the actual at least one sensor also provide limited data storage and processing capabilities. Motes, for example, usually have multiple different sensor tags per device, such as temperature, light, and humidity to name a few examples. These sensor nodes can for so-called (wireless) sensor networks solve simple processing in cooperation.

US 6 108 616 discloses the preamble of claim 1.

**Summary of the Invention**

The invention relates to processing sensor data on a sensor device.

In a first general aspect, a method of providing sensor-based information from a sensor device to an application program includes receiving; in a sensor device, sensor data obtained using a sensor. The method includes determining, in the sensor device, whether the sensor data meets a predefined condition associated with an application program in a computer system. If the sensor data meets the predefined condition, the method includes forwarding an event message associated with the predefined condition from the sensor device for receipt by the application program.

Implementations may include any or all of the following features. The sensor data may include several sensor readings of a physical characteristic. The event message may include at least a portion of the several sensor readings. The method may further include aggregating the several sensor readings to obtain the portion of the several sensor readings. The method may further include filtering the several sensor readings to obtain the portion of the several sensor readings. The event message may be generated by processing the several sensor readings at the sensor device and then consolidating the processed sensor readings at the sensor device. The event message may be generated by consolidating the several sensor readings at the sensor device and then processing the consolidated sensor readings at the sensor device. Receiving the sensor data may include receiving at least one of the several sensor readings at the sensor device from another sensor device that is networked with the sensor device. The several sensor readings may be obtained at the sensor device using the sensor. Receiving the sensor data may further include at least two kinds of sensor data. The method may further include enhancing the sensor data to generate the event message. Determining whether the sensor data meets the predefined condition may include performing an interpretation of the sensor data in the sensor device. An outcome of the interpretation may be included in the event message before it is forwarded.

In a second general aspect, a sensor device includes a sensor configured to make sensor readings of a physical characteristic, and a data processing component. The data processing component is configured to determine whether sensor data meets a predefined condition associated with an application program in a computer system. The data processing component is also configured to forward, if the sensor data meets the predefined condition, an event message associated with the predefined condition for receipt by the application program.

Implementations may include any or all of the following features. The sensor data may include several sensor readings of a physical characteristic, and the data processing component may further include a filtering component configured to filter the several sensor readings to obtain the event message. The sensor data may include several sensor readings of a physical characteristic, and the data processing component may further include an aggregation component configured to aggregate the several sensor readings to obtain the event message. The sensor data may include several sensor readings of a physical characteristic, and the sensor device may receive at least one of the several sensor readings from another sensor device with which the sensor device is networked.

In a third general aspect, a system using sensor-based information includes a computer system configured to execute an application program, a first sensor device and a second sensor device. The first sensor device is configured to generate first sensor data, and the second sensor device is configured to generate second sensor data and to forward the second sensor data to the first sensor device. The first sensor device determines whether the first and second sensor data meet a predefined condition associated with the application program. The first sensor device also forwards, if the first and second sensor data meet the predefined condition, an event message associated with the predefined condition to the computer system for receipt by the application program.

Implementations may include any or all of the following features. The first sensor device may further include a filtering component configured to filter the first and second sensor data to obtain the event message. The first sensor device may further include an aggregation component configured to aggregate the first and second sensor data to obtain the event message.

The implementations may provide any or all of the following advantages: Providing that sensor data aggregation or preprocessing can be performed directly on sensor devices; reducing the amount of data that has to be transmitted from the sensor devices to the integration; transmitting only relevant data in the right format; improving scalability of the overall system since a larger number of sensor devices can be handled; allowing the use of redundant sensor devices to provide failover solutions; reducing the data traffic in the system and also reducing the workload of higher-level applications in the system; providing a more scalable, reliable, accurate and efficient system; providing a network of cooperating devices that share and consolidate data; provide some useful preprocessing even if the sensor device is temporarily disconnected from the higher system layers.

The details of one or more embodiments of the invention are set forth in the accompanying drawings and the description below. Other features, objects, and advantages of the invention will be apparent from the description and drawings, and from the claims.

**Brief description of the Drawings**

In the drawings,
Figure 1 is a block diagram showing multiple sensor devices configured to make sensor readings of a physical characteristic and to provide information to an application program in a computer system.
Figure 2 is a block diagram of a sensor device.
Figure 3 is a flow chart of exemplary operations that can be performed to provide sensor-based information from a sensor device for receipt by an application program.
Like reference numerals in the various drawings indicate like elements.

**Detailed Description**

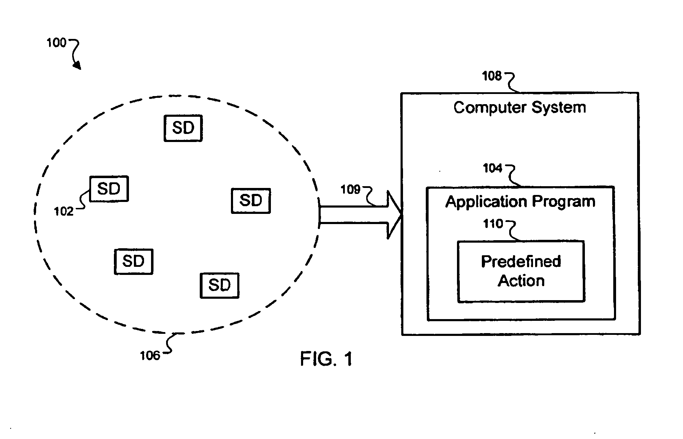

Figure 1 shows an exemplary block diagram of a system 100. There, a sensor device 102 is configured to make sensor readings of a physical characteristic and to provide information to an application program 104 in a computer system 108. Physical characteristics may include, but are not limited to: temperature, pressure, acceleration, or humidity readings to name a few examples. The sensor device 102 preprocesses the sensor data to determine whether at least one predefined condition associated with the application program 104 has been met. If the predefined condition has been met, the sensor device 102 forwards an event message, schematically shown by an arrow 109, for receipt by that particular application program. The application program 104 contains one or more predefined actions 110 to be performed if the predefined condition is met. For example, when the sensor device 102 senses a critical temperature, the predefined action in the application program 104 may be to turn on a cooling system to lower the temperature in the area around the sensor device 102.

Event messages may include a combination of some or all of the actual sensor data or may be a combination of multiple preprocessed sensor readings. For example, the preprocessing could include aggregating, filtering or otherwise enhancing raw sensor readings. Multiple sensor readings may be consolidated and processed on one or more sensor devices before the event message is created and forwarded to the computer system 108. In addition, multiple types of sensor data may be combined to generate the event message.

Several sensor devices may be included in a network 106 for sharing sensor data. For example, one sensor device 102 can preprocess sensor data from several other sensor devices and send one or more event messages as necessary. The sensor devices may be networked using any type of communication format or protocol, for example in a wireless network.

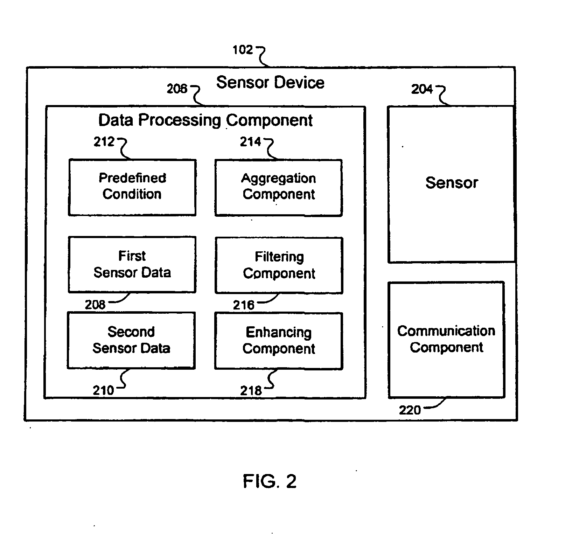

Figure 2 is a block diagram of the sensor device 102. The sensor device 102 includes an environmental sensor 204 that measures an environmental condition within a specified area. For example, the sensor 204 can measure environmental conditions such as temperature, humidity, acceleration, pressure, light, position, movement or sound. In general, a sensor device can have several different sensors.

The sensor device 102 also includes a data processing component 206 that processes sensor data. This may be data collected from the sensor 204 in the sensor device, data from another sensor of the sensor device 102, data from another sensor in the network 106, or a combination thereof. That is, the data processing component 206 may process first sensor data 208 that was generated locally or second sensor data 210 that was generated remotely, or both. The data processing component 206 also includes a definition of a predefined condition 212, an aggregation component 214, a filtering component 216 and an enhancing component 218. The components 214-218 may be used for processing sensor data. Other implementations may have more or fewer components.

The predefined condition 212 may specify a condition for sending the event message to the computer system 108. The predefined condition 212 can be implemented on the sensor device 102 to send the event message. For example, the predefined condition 212 may cause the sensor device to trigger the event message if a maximum threshold is reached, if a typical or faulty value is obtained, or if a specified time has passed.

The aggregation component 214 can include one or more types of aggregators, each configured to identify different types of business events. Exemplary types of aggregators include a threshold value aggregator, a constant value aggregator, a changed value aggregator, a rising edge aggregator, and a falling edge aggregator. Other aggregator types are possible.

A threshold value aggregator detects threshold value events. A threshold value event occurs when the sensor data values reach a predefined threshold value. The threshold value is supplied as input to the aggregator. An additional input parameter to the aggregator specifies whether the threshold is an upper bound, a lower bound, or any type of bound.

In one implementation, the threshold value aggregator behaves according to the following algorithm, expressed in pseudo-code. In this pseudo-code, "$x_i$" represents the sensor data value at time $i$ and, assuming: $n \in N$ number of sensor devices to provide sensor readings for a physical property at time $i$, $\overline{X}_i$ represents the "consolidated" (e.g., average or median of all measured values $X_i$ from the device 1..n. There are multiple ways to "consolidate' readings from multiple sensing devices. One could be:

$$\overline{x} := \frac{\sum_{i=1}^{n} x_i}{n}$$

or with $X_i$ the min and $X_n$ the max values:

$$\overline{x} := \frac{\sum_{i=2}^{n-1} x_i}{n-2}$$

Others are possible.

```
loop forever {

    at time now get sensor data $\overline{X}_{now-1}$, $\overline{X}_{now}$
    if (Direction == 'rising') AND

        ($\overline{X}_{now-1}$ < Threshold) AND

        ($\overline{X}_{now}$ ≥ Threshold)
    then issue 'Maximum Value Alert' message
    if (Direction == 'falling') AND

        ($\overline{X}_{now-1}$ > Threshold) AND

        ($\overline{X}_{now}$ ≤ Threshold)
    then issue 'Minimum Value Alert' message


    if (Direction == 'any') AND

        (($\overline{X}_{now-1}$ < Threshold) AND ($\overline{X}_{now}$ ≥ Threshold)
        OR

        ($\overline{X}_{now-1}$ > Threshold) AND ($\overline{X}_{now}$ ≤ Threshold))
    then issue 'Value Reached Alert' message

    }
```

This algorithm can also be expressed mathematically as follows. In these mathematical expressions, "$x_i$" represents the sensor data value at time *i* and "*c*" represents the threshold value.
For upper bounds:

$$\left(\overline{x_{now}} \geq c\right) \wedge \left(\overline{x_{now-1}} < c\right)$$

For lower bounds:

$$\left(\overline{x_{now}} \leq c\right) \wedge \left(\overline{x_{now-1}} > c\right)$$

For either:

$$\left( \left( \overline{x}_{now} \geq c \right) \wedge \left( \overline{x}_{now-1} < c \right) \right) \vee \left( \left( \overline{x}_{now} \leq c \right) \wedge \left( \overline{x}_{now-1} > c \right) \right)$$

A constant value aggregator detects constant value events. A constant value event occurs when sensor data values remain constant for a specified time interval. This time interval is specified as an input to the constant value aggregator. The constant value aggregator can be configured to tolerate a certain degree of variance. If the data values change, but by no more than the tolerated degree of variance, then the data values will be considered to be constant. The variance can be specified as an additional input parameter to the constant value aggregator.

In one implementation, the constant value aggregator behaves according to the following algorithm, expressed in pseudo-code. In this pseudo-code, *"x$_i$"* represents the sensor data value at time *i*.

---

**Window_Size** := [**Sensor_Sample_Rate** * **Idle_Time**]

loop forever {

  **Constant_Value** := TRUE

  at time **now** get sensor data $\overline{X}_{now\text{-Window\_Size}+1}, \ldots, \overline{X}_{now-1}, \overline{X}_{now}$

  **Tolerance** := ($\overline{X}_{now}$/100) * **Variance**

  for (i:=0; i < **Window_Size**; i++) {

    if ($\overline{X}_{now-i} < \overline{X}_{now}$-**Tolerance**) AND ($\overline{X}_{now-i} > \overline{X}_{now}$+**Tolerance**)

    then set **Constant_Value** := FALSE

  }

  if (**Constant_Value** == TRUE)

    then issue '**Value Constant for Idle Time Alert**' message

}

---

This algorithm can also be expressed mathematically as follows. In this mathematical expression, *"x$_i$"* represents the sensor data value at time *i* and *"v"* represents the variance. Window size *"w"* is calculated by multiplying the idle time parameter with the sensor sampling rate.

$$\bigvee_{i=now-w+1}^{now-1} \overline{x}_i : \left( \overline{x}_i < \overline{x_{now}}\left(1 + \frac{1}{100}v\right) \right) \wedge \left( \overline{x}_i > \overline{x}_{now}\left(1 - \frac{1}{100}v\right) \right)$$

A changed value aggregator detects changed value events. A changed value event occurs when the sensor data values change within a specified time interval. This time interval is specified as input to the changed value aggregator.

In one implementation, the change must be significant, that is, the change must be more than a certain minimum level of change. The required minimum level of change can be specified as an additional input to the changed value aggregator.

In one implementation, the changed value aggregator behaves according to any one of the following three algorithms, expressed in pseudo-code. In this pseudo-code, **"$x_i$"** represents the sensor data value at time *i*.

<u>Algorithm 1</u>:

**Window_Size** := [**Sensor_Sample_Rate * Wait_Time**]

loop forever {

  **All_Above** := TRUE

  **All_Below** := TRUE

  at time **now** get sensor data $\overline{X}_{now\text{-}Window\_Size+1}, \ldots, \overline{X}_{now\text{-}1}, \overline{X}_{now}$

  **Tolerance** := ($\overline{X}_{now}$/100) * **Variance**

  for (i:=0; i < **Window_Size**; i++) {

    if ($\overline{X}_{now\text{-}i} \leq \overline{X}_{now\text{-}Window\_Size+1}$+**Tolerance**)

      then set **All_Above** := FALSE

    if ($\overline{X}_{now\text{-}i} \geq \overline{X}_{now\text{-}Window\_Size+1}$-**Tolerance**)

      then set **All_Below** := FALSE

  }

  if (**All_Above** == TRUE) OR (**All_Below** == TRUE)

    then issue '**Value Changed**' message

}

Algorithm 2:

**Window_Size** := [**Sensor_Sample_Rate** * **Wait_Time**]

loop forever {

  **Changed_Value** := TRUE

  at time **now** get sensor data $\overline{X}_{now-Window\_Size+1}, \ldots, \overline{X}_{now-1}, \overline{X}_{now}$

  **Tolerance** := ($\overline{X}_{now}$/100) * **Variance**

  for (i:=0; i < **Window_Size**; i++) {

    if ($\overline{X}_{now-i}$ > $\overline{X}_{now-Window\_Size+1}$+**Tolerance**) OR

    ($\overline{X}_{now-i}$ < $\overline{X}_{now-Window\_Size+1}$-**Tolerance**)

      then set **Changed_Value** := FALSE

  }

  if (**Changed_Value** == TRUE)

    then issue '**Value Changed**' message

}

Algorithm 3:

**Window_Size** := [**Sensor_Sample_Rate** * **Wait_Time**]

loop forever {

  $\overline{X}$_**Average** := 0

  at time **now** get sensor data $\overline{X}_{now-Window\_Size+1}, \ldots, \overline{X}_{now-1}, \overline{X}_{now}$

  for (i:=0; i < **Window_Size**; i++)

    $\overline{X}$_**Average** := $\overline{X}$_**Average** + $\overline{X}_{now-i}$ {

  if ($\overline{X}$_**Average** > $\overline{X}_{now-Window\_Size+1}$+**Tolerance**) OR

  ($\overline{X}$_**Average** < $\overline{X}_{now-Window\_Size+1}$-**Tolerance**)

    then issue '**Value Changed**' message

}

These algorithms can also be expressed mathematically as follows. In these mathematical expressions, "$x_i$" represents the sensor data value at time *i* and "*v*" represents the variance, or the minimal level of change required to be significant.

Algorithm 1:

$$\left( \bigvee_{i=now-w+2}^{now} \overline{x}_i : \overline{x}_i > \overline{x}_{now-w+1}\left(1 + \frac{1}{100}v\right) \right) \vee \left( \bigvee_{i=now-w+2}^{now} \overline{x}_i : \overline{x}_i < \overline{x}_{now-w+1}\left(1 - \frac{1}{100}v\right) \right)$$

Algorithm 2:

$$\bigvee_{i=now-w+2}^{now} \overline{x}_i : \overline{x}_i > \overline{x}_{now-w+1}\left(1 + \frac{1}{100}v\right) \vee \overline{x}_i < \overline{x}_{now-w+1}\left(1 - \frac{1}{100}v\right)$$

Algorithm 3:

$$\overline{x} := \frac{\sum_{i=now-w+1}^{now} \overline{x}_i}{w}; \quad \overline{x} > \overline{x}_{now-w+1}\left(1 + \frac{1}{100}v\right) \vee \overline{x} < \overline{x}_{now-w+1}\left(1 - \frac{1}{100}v\right)$$

A rising edge aggregator detects rising edge events. A rising edge event is an event that occurs when the sensor data values rise faster than a given rate. The rising edge aggregator requires input specifying a window size and a steepness value. The window size indicates the number of sensor data values to be considered and the steepness value indicates the minimal steepness required of the rising edge.

In one implementation, the rising edge aggregator behaves according to the following algorithm, expressed in pseudo-code. In this pseudo-code, *"x<sub>i</sub>"* represents the sensor data value at time *i*.

```
loop forever {

    Delta = X_now - X_now-Window_Size+1

    if (Delta/Window_Size ≥ Steepness)

        then issue 'Value Raised' message

}
```

This algorithm can also be expressed mathematically as follows. In this mathematical expression, *"x<sub>i</sub>"* represents the sensor data value at time *i*, *"s"* represents the steepness value, and *"w"* represents the window size.

$$s \leq \frac{x_{now} - x_{now-w+1}}{w}$$

A falling edge aggregator detects falling edge events. A falling edge event occurs when the sensor data values fall faster than a given rate. The falling edge aggregator requires input specifying a window size and a steepness value.

The window size indicates the number of sensor data values to be considered and the steepness value indicates the minimal steepness required of the falling edge.

In one implementation, the falling edge aggregator behaves according to the following algorithm, expressed in pseudo-code. In this pseudo-code, $"x_i"$ represents the sensor data value at time $i$.

```
loop forever {
    Delta = X_now-Window_Size+1 − X_now
    if (Delta/Window_Size ≥ Steepness)
        then issue 'Value Fell' message
}
```

This algorithm can also be expressed mathematically as follows. In this mathematical expression, $"x_i"$ represents the sensor data value at time $i$, $"s"$ represents the steepness value, and $"w"$ represents the window size.

$$s \le \frac{X_{now-w+1} - X_{now}}{w}$$

Any or all of the above-described sensor data aggregators can be implemented in one or more sensor devices. Particularly, any or all of them can be implemented in the sensor device 102 to preprocess data from the network 106.

The data processing component 206 includes the filtering component 216, which may discard sensor data that is irrelevant for the corresponding application program. The filtering component 216 may filter several sensor readings to obtain a portion of the original sensor data. For example, filtering may include discarding faulty, unreliable or redundant data. In this scenario, a sensor reading $"x_{now}"$ is discarded if it is considered typical or non-exceptional. A value is considered typical if it corresponds to the average of the values in a specified window size. A typical window size in this scenario may be greater than 20.

This algorithm to discard a typical value can be expressed mathematically as follows. In this mathematical expression, $"x"$ represents the sensor data value, $"v"$ represents the variance, or the minimal level of change required to be significant and $"w"$ represents the window size.

$$\overline{X} := \frac{\sum_{i=now-w+1}^{now} x_i}{w}; \quad \overline{X} > X_{now}\left(1 + \frac{1}{100}v\right) \wedge \overline{X} < X_{now}\left(1 - \frac{1}{100}v\right)$$

This algorithm to discard a duplicate value can be expressed mathematically as follows:

$$\exists_{i=now-w+1}^{now-1} X_i : \left\langle X_i < X_{now}\left(1 + \frac{1}{100}v\right)\right\rangle \wedge \left\langle X_i < X_{now}\left(1 - \frac{1}{100}v\right)\right\rangle$$

The enhancing component 218 prepares or transforms the sensor data to make it more suitable to the respective application program. For example, the enhancing component 218 may convert a temperature reading to an appropriate unit of measure such as converting a received sensor data value to a degrees Fahrenheit or degrees Kelvin format.

Additionally, the enhancing component 218 may combine the sensor data to create averages or specific diagnostic data for each network of sensor devices. For example, a humidity reading, a temperature reading and a movement reading may be combined to detect the presence of a moving life form in the physical environment surrounding the sensors.

The sensor device 102 may combine at least two kinds of sensor data to create the event message. For example, two sensor devices may sense two different physical characteristics in the environment, such as temperature and humidity. The temperature sensor may share sensor data with the humidity sensor and vice versa for purposes of combining the two values to create one interpretation of the physical environment. For example, combining temperature and humidity values between sensors may determine an inappropriate storage event for a particular product. Additionally, the sensor device 102 may send event messages to the computer system 108 upon combining sensor data and meeting a predefined condition 212. For example, one sensor may take measurements of different physical characteristics to meet one or more predefined conditions.

The data processing component 106 also includes a communication component 220 used to communicate with other sensor devices that are within range and to send event messages to the computer system 108. The communication component 220 may transmit the event message based on preprocessed data, such as aggregated, filtered or enhanced sensor data. Each sensor device 102 may communicate with other sensor devices in the network through their respective communication components.

The above-described combination of two kinds of sensor data is one example of preprocessing. Particularly, preprocessing may involve combining received data values into one or more consolidated values. Data consolidations may be done, for example, within the first sensor data 208 or between the first sensor data 208 and second sensor data 210. Data consolidations may also be done between several other sensor devices in the network 106. One or more algorithms may be implemented to perform the consolidation of data. A consensus-based algorithm is one example of a type of algorithm used to consolidate data to achieve higher reliability and accuracy from the sensor network. The consensus-based algorithms may determine or filter outlier values that do not fit the predefined condition 212 in the sensor device 102, or may simply send an alert message when the outlier value readings exist. Additionally, sensor data filtering and aggregation may be done efficiently based on a sensor network by using different network topologies and distributed and parallel data processing on the individual sensor device(s) 102.

Preprocessing techniques may be performed on several sensor data values to obtain relevant data for a particular application program. The processing and consolidation of one or more sensor readings at the sensor device 102 can cause transmission of the event message. For example, one or more sensor readings may first be processed, and thereafter be consolidated at the sensor device 102. For example, several temperature and humidity readings may be collected at the sensor device 102, and filtered for a specified time period. Upon filtering out the sensor readings that do not occur during the time period, the sensor device 102 may consolidate the remaining sensor readings. The consolidation activity may cause the predefined condition 212 to trigger the event message. As another example, one or more sensor readings may first be consolidated, and thereafter be processed at the sensor device 102. For example, several temperature readings may be collected and combined on a particular sensor device, and they may be processed at a later time, such as when an atypical temperature reading is received. If receiving an atypical temperature reading meets the predefined condition 212, the event message may be transmitted.

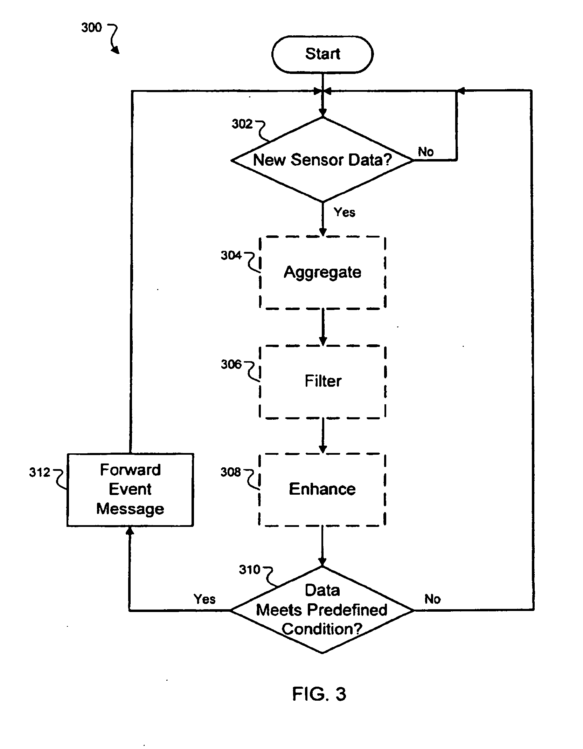

Figure 3 is a flow chart of exemplary operations 300 that can be performed to provide sensor-based information from a sensor device for receipt by an application program. The operations 300 can be performed by a processor executing instructions stored in a computer program product. The operations 300 begin in step 302 with receiving, in the sensor device, sensor data obtained using a sensor. For example, the sensor device 102 may receive the first sensor data 208 from the sensor 204 and the second sensor data 210 from other networked sensor devices. If new sensor data is not received in step 302, the operations wait until new sensor data is received.

Optional steps 304-308 may be performed to aggregate, filter or enhance the sensor data. In step 304, the operations comprise aggregating the sensor data. For example the aggregation component 214 may aggregate several sensor readings to obtain the event message. For example, the first sensor data 208 may be combined with the second sensor data 210 to determine the appropriate event message. In step 306, the operations comprise filtering the sensor data. For example, the filtering component 216 may filter the several sensor readings to obtain the event message. For example, the filtering component 216 may filter out temperature readings that fall in a typical range, thereby generating the event message when an atypical reading is obtained. In step 308, the operations comprise enhancing the sensor data to generate the event message. For example, the enhancing component 218 may preprocess data by averaging several readings over the last hour, thereby enhancing the raw data before sending the event message.

In step 310, the operations comprise inquiring if the sensor data meets the predefined condition. This may be done using consolidated data, data from several sensor devices, or consolidated data from several sensor devices to name some examples. If the predefined condition has been met, the sensor device forwards the event message associated with the predefined condition from the sensor device for receipt by the application program in step 312. If the predefined condition has not been met, the operations return to step 302 to await the receipt of new sensor data.

A number of embodiments of the invention have been described. Nevertheless, it will be understood that various modifications may be made without departing from the scope of the invention. Accordingly, other embodiments are within the scope of the following claims.

**Claims**

1. A method of providing sensor-based information from a sensor device (102) to an application program (104), the method comprising:

   receiving, in a first sensor device (102), sensor data obtained using a sensor (204) and sensor data from at least one other sensor device that is networked with the first sensor device; **characterized by**
   determining, in the first sensor device (102), whether the received sensor data meets a predefined condition (212) associated with an application program (104) in a computer system (108), thereby performing an interpretation of the sensor data in the sensor device (102); and
   if the received sensor data meets the predefined condition (212), generating an event message (109) associated with the predefined condition (212) and including an outcome of the interpretation and forwarding the event message (109) from the first sensor device (102) for receipt by the application program (104).

2. The method according to claim 1, wherein the sensor data comprises several sensor readings of a physical characteristic.

3. The method according to claim 2, wherein the event message includes at least a portion of the several sensor readings.

4. The method according to claim 3, further comprising aggregating the several sensor readings to obtain the portion of the several sensor readings.

5. The method according to claim 3, further comprising filtering the several sensor readings to obtain the portion of the several sensor readings.

6. The method according to any one of claims 2 to 5, wherein the event message is generated by processing the several sensor readings at the sensor device (102) and then consolidating the processed sensor readings at the sensor device (102).

7. The method according to any one of claims 2 to 6, wherein the several sensor readings are obtained at the sensor device (102) using the sensor (204).

8. The method according to any one of the preceding claims, wherein receiving the sensor data further comprises combining at least two kinds of sensor data.

9. The method according to any one of the preceding claims, further comprising enhancing the sensor data to generate the event message.

10. A sensor device comprising:

    a sensor (204) configured to make sensor readings of a physical characteristic; and
    a data processing component (206) configured to (1) determine whether sensor data (208, 210) meets a predefined condition (212) associated with an application program (104) in a computer system (108), thereby performing an interpretation of the sensor data in the sensor device (102), and (2) generate, if the sensor data (208, 210) meets the predefined condition (212), an event message associated with the predefined condition (212) and including an outcome of the interpretation, and forward the event message for receipt by the application program (104), wherein the sensor device is configured to receive sensor data from at least one other sensor device that is networked with said sensor device.

11. The sensor device according to claim 10, wherein the sensor data (208, 210) comprises several sensor readings of a physical characteristic, and wherein the data processing component (206) further comprises a filtering component (216) configured to filter the several sensor readings to obtain the event message.

12. The sensor device according to claim 10 or 11, wherein the sensor data comprises several sensor readings of a physical characteristic, and wherein the data processing component (206) further comprises an aggregation component (214) configured to aggregate the several sensor readings to obtain the event message.

13. The sensor device according to any one of claims 10 to 12, wherein the sensor data comprises several sensor readings of a physical characteristic.

14. A system using sensor-based information, the system comprising:

   a computer system (108) configured to execute an application program (104);
   a first sensor device configured to generate first sensor data (208); and
   a second sensor device configured to generate second sensor data (210) and to forward the second sensor data to the first sensor device;

   wherein the first sensor device (1) determines whether the first and second sensor data (208, 210) meet a predefined condition associated with the application program (104), thereby performing an interpretation of the sensor data in the sensor device (102), and (2) generates, if the first and second sensor data (208, 210) meet the predefined condition, an event message associated with the predefined condition including an outcome of the interpretation, and forwards the event message to the computer system (108) for receipt by the application program (104).

15. The system according to claim 14, wherein the first sensor device further comprises a filtering component configured to filter the first and second sensor data to obtain the event message.

16. The system according to claim 14 or 15, wherein the first sensor device further comprises an aggregation component configured to aggregate the first and second sensor data to obtain the event message.

**Patentansprüche**

1. Verfahren, um einem Anwendungsprogramm (104) Sensorbasierte Informationen von einer Sensorvorrichtung (102) bereitzustellen, mit folgenden Schritten:

   Empfangen, in einer ersten Sensorvorrichtung (102), von Sensordaten, die unter Verwendung eines Sensors (204) erhalten wurden, und von Sensordaten von mindestens einer anderen Sensorvorrichtung, die über ein Netzwerk mit der ersten Sensorvorrichtung verbunden ist,

   **gekennzeichnet durch**:

   Bestimmen, in der ersten Sensorvorrichtung (102), ob die empfangenen Sensordaten eine vordefinierte Bedingung (212), die einem Anwendungsprogramm (104) in einem Computersystem (108) zugeordnet ist, erfüllen, wodurch eine Interpretation der Sensordaten in der Sensorvorrichtung (102) ausgeführt wird, und
   falls die empfangenen Sensordaten die vordefinierte Bedingung (212) erfüllen, Erzeugen einer Ereignisnachricht (109), die der vordefinierten Bedingung (212) zugeordnet ist, und Aufnehmen eines Ergebnisses der Interpretation und Weiterleiten der Ereignisnachricht (109) von der ersten Sensorvorrichtung (102) zum Empfang **durch** das Anwendungsprogramm (104).

2. Verfahren nach Anspruch 1, wobei die Sensordaten mehrere Sensormesswerte einer physikalischen Größe aufweisen.

3. Verfahren nach Anspruch 2, wobei die Ereignisnachricht mindestens einen Teil der mehreren Sensormesswerte aufweist.

4. Verfahren nach Anspruch 3, bei dem ferner die mehreren Sensormesswerte angesammelt werden, um den Teil der mehreren Sensormesswerte zu erhalten.

5. Verfahren nach Anspruch 3, bei dem ferner die mehreren Sensormesswerte gefiltert werden, um den Teil der mehreren Sensormesswerte zu erhalten.

**6.** Verfahren nach einem der Ansprüche 2 bis 5, wobei die Ereignisnachricht durch Verarbeiten der mehreren Sensormesswerte an der Sensorvorrichtung (102) erzeugt wird und die verarbeiteten Sensormesswerte dann an der Sensorvorrichtung (102) konsolidiert werden.

**7.** Verfahren nach einem der Ansprüche 2 bis 6, wobei die mehreren Sensormesswerte unter Verwendung des Sensors (204) an der Sensorvorrichtung (102) erhalten werden.

**8.** Verfahren nach einem der voranstehenden Ansprüche, wobei beim Empfangen der Sensordaten ferner mindestens zwei Arten von Sensordaten kombiniert werden.

**9.** Verfahren nach einem der voranstehenden Ansprüche, bei dem ferner die Sensordaten erweitert werden, um die Ereignisnachricht zu erzeugen.

**10.** Sensorvorrichtung mit:

einem Sensor (204), der konfiguriert ist, um Sensormesswerte einer physikalischen Größe zu bilden, und einer Datenverarbeitungskomponente (206), die konfiguriert ist, um folgendes auszuführen: (1) Feststellen, ob Sensordaten (208, 210) eine vordefinierte Bedingung (212), die einem Anwendungsprogramm (104) in einem Computersystem (108) zugeordnet ist, erfüllen, wodurch eine Interpretation der Sensordaten in der Sensorvorrichtung (102) ausgeführt wird, und (2) Erzeugen, falls die Sensordaten (208, 210) die vordefinierte Bedingung (212) erfüllen, einer Ereignisnachricht, die der vordefinierten Bedingung (212) zugeordnet ist, und Aufnehmen eines Ergebnisses der Interpretation und Weiterleiten der Ereignisnachricht zum Empfang durch das Anwendungsprogramm (104), wobei die Sensorvorrichtung konfiguriert ist, um Sensordaten von mindestens einer anderen Sensorvorrichtung, die über ein Netzwerk mit der Sensorvorrichtung verbunden ist, zu empfangen.

**11.** Sensorvorrichtung nach Anspruch 10, wobei die Sensordaten (208, 210) mehrere Sensormesswerte einer physikalischen Größe aufweisen und wobei die Datenverarbeitungskomponente (206) ferner eine Filterkomponente (216) aufweist, die konfiguriert ist, um die mehreren Sensormesswerte zu filtern, um die Ereignisnachricht zu erhalten.

**12.** Sensorvorrichtung nach Anspruch 10 oder 11, wobei die Sensordaten mehrere Sensormesswerte einer physikalischen Größe aufweisen und wobei die Datenverarbeitungskomponente (206) ferner eine Ansammlungskomponente (214) aufweist, die konfiguriert ist, um die mehreren Sensormesswerte anzusammeln, um die Ereignisnachricht zu erhalten.

**13.** Sensorvorrichtung nach einem der Ansprüche 10 bis 12, wobei die Sensordaten mehrere Sensormesswerte einer physikalischen Größe aufweisen.

**14.** System, bei dem sensorbasierte Informationen verwendet werden, mit:

einem Computersystem (108), das konfiguriert ist, um ein Anwendungsprogramm (104) auszuführen, einer ersten Sensorvorrichtung, die konfiguriert ist, um erste Sensordaten (208) zu erzeugen, und einer zweiten Sensorvorrichtung, die konfiguriert ist, um zweite Sensordaten (210) zu erzeugen und die zweiten Sensordaten zu der ersten Sensorvorrichtung weiterzuleiten,

wobei die erste Sensorvorrichtung folgendes ausführt: (1) Feststellen, ob die ersten und zweiten Sensordaten (208, 210) eine vordefinierte Bedingung, die dem Anwendungsprogramm (104) zugeordnet ist, erfüllen, wobei eine Interpretation der Sensordaten in der Sensorvorrichtung (102) ausgeführt wird, und (2) Erzeugen, falls die ersten und zweiten Sensordaten (208, 210) die vordefinierte Bedingung erfüllen, einer Ereignisnachricht, die der vordefinierten Bedingung zugeordnet ist, einschließlich eines Ergebnisses der Interpretation, und Weiterleiten der Ereignisnachricht zu dem Computersystem (108) zum Empfang durch das Anwendungsprogramm (104).

**15.** System nach Anspruch 14, wobei die erste Sensorvorrichtung ferner eine Filterkomponente aufweist, die konfiguriert ist, um die ersten und zweiten Sensordaten zu filtern, um die Ereignisnachricht zu erhalten.

**16.** System nach Anspruch 14 oder 15, wobei die erste Sensorvorrichtung ferner eine Ansammlungskomponente aufweist, die konfiguriert ist, um die ersten und zweiten Sensordaten anzusammeln, um die Ereignisnachricht zu erhalten.

**Revendications**

1.  Procédé pour délivrer des informations basées sur un capteur en provenance d'un dispositif de capteur (102) à un programme d'application (104), le procédé comportant l'étape consistant à :

    recevoir, dans un premier dispositif de capteur (102), des données de capteur obtenues en utilisant un capteur (204) et des données de capteur provenant d'au moins un autre dispositif de capteur qui est en réseau avec le premier dispositif de capteur ; **caractérisé par** les étapes consistant à :

    déterminer, dans le premier dispositif de capteur (102), si les données de capteur reçues satisfont à une condition prédéfinie (212) associée à un programme d'application (104) dans un système informatique (108), en effectuant ainsi une interprétation des données de capteur dans le dispositif de capteur (102) ; et si les données de capteur reçues satisfont à la condition prédéfinie (212), générer un message d'événement (109) associé à la condition prédéfinie (212) et incluant un résultat de l'interprétation et envoyer le message d'événement (109) à partir du premier dispositif de capteur (102) en vue d'une réception par le programme d'application (104).

2.  Procédé selon la revendication 1, dans lequel les données de capteur comportent une pluralité de lectures de capteur d'une caractéristique physique.

3.  Procédé selon la revendication 2, dans lequel le message d'événement inclut au moins une partie de la pluralité de lectures de capteur.

4.  Procédé selon la revendication 3, comportant en outre l'agrégation de la pluralité de lectures de capteur afin d'obtenir la partie de la pluralité de lectures de capteur.

5.  Procédé selon la revendication 3, comportant également le filtrage de la pluralité de lectures de capteur afin d'obtenir la partie de la pluralité de lectures de capteur.

6.  Procédé selon l'une quelconque des revendications 2 à 5, dans lequel le message d'événement est généré en traitant la pluralité de lectures de capteur sur le dispositif de capteur (102) et en regroupant ensuite les lectures de capteur traitées sur le dispositif de capteur (102).

7.  Procédé selon l'une quelconque des revendications 2 à 6, dans lequel la pluralité de lectures de capteur est obtenue sur le dispositif de capteur (102) en utilisant le capteur (204).

8.  Procédé selon l'une quelconque des revendications précédentes, dans lequel la réception des données de capteur comporte en outre la combinaison d'au moins deux types de données de capteur.

9.  Procédé selon l'une quelconque des revendications précédentes, comportant en outre l'amélioration des données de capteur afin de générer le message d'événement.

10. Dispositif de capteur comportant :

    un capteur (204) configuré pour établir des lectures de capteur d'une caractéristique physique ; et un composant de traitement de données (206) configuré pour (1) déterminer si des données de capteurs (208, 210) satisfont à une condition prédéfinie (212) associée à un programme d'application (104) dans un système informatique (108), en effectuant ainsi une interprétation des données de capteur dans le dispositif de capteur (102), et (2) générer, si les données de capteur (208, 210) satisfont à la condition prédéfinie (212), un message d'événement associé à la condition prédéfinie (212) et incluant un résultat de l'interprétation, et envoyer le message d'événement en vue d'une réception par le programme d'application (104), dans lequel le dispositif de capteur est configuré pour recevoir des données de capteur provenant d'au moins un autre dispositif de capteur qui est en réseau avec ledit dispositif de capteur.

11. Dispositif de capteur selon la revendication 10, dans lequel les données de capteur (208, 210) comportent une pluralité de lectures de capteur d'une caractéristique physique, et dans lequel le composant de traitement de données (206) comporte en outre un composant de filtrage (216) configuré pour filtrer la pluralité de lectures de capteur afin d'obtenir le message d'événement.

**12.** Dispositif de capteur selon la revendication 10 ou 11, dans lequel les données de capteur comportent une pluralité de lectures de capteur d'une caractéristique physique, et dans lequel le composant de traitement de données (206) comporte également un composant d'agrégation (214) configuré pour agréger la pluralité de lectures de capteur afin d'obtenir le message d'événement.

**13.** Dispositif de capteur selon l'une quelconque des revendications 10 à 12, dans lequel les données de capteur comportent une pluralité de lectures de capteur d'une caractéristique physique.

**14.** Système utilisant des informations basées sur un capteur, le système comportant :

un système informatique (108) configuré pour exécuter un programme d'application (104) ;
un premier dispositif de capteur configuré pour générer des premières données de capteur (208) ; et
un second dispositif de capteur configuré pour générer des secondes données de capteur (210) et pour envoyer les secondes données de capteur au premier dispositif de capteur ;

dans lequel le premier dispositif de capteur (1) détermine si les premières et secondes données de capteur (208, 210) satisfont à une condition prédéfinie associée au programme d'application (104), en effectuant ainsi une interprétation des données de capteur dans le dispositif de capteur (102), et (2) génère, si les premières et secondes données de capteur (208, 210) satisfont à la condition prédéfinie, un message d'événement associé à la condition prédéfinie incluant un résultat de l'interprétation, et envoie le message d'événement au système informatique (108) en vue d'une réception par le programme d'application (104).

**15.** Système selon la revendication 14, dans lequel le premier dispositif de capteur comporte en outre un composant de filtrage configuré pour filtrer les premières et secondes données de capteur afin d'obtenir le message d'événement.

**16.** Système selon la revendication 14 ou 15, dans lequel le premier dispositif de capteur comporte également un composant d'agrégation configuré pour agréger les premières et secondes données de capteur afin d'obtenir le message d'événement.

FIG. 1

102
Sensor Device

206
Data Processing Component

212
Predefined Condition

214
Aggregation Component

First Sensor Data

Filtering Component

208

Second Sensor Data

Enhancing Component

210

216

218

204
Sensor

Communication Component

220

FIG. 2

FIG. 3

**EP 1 816 535 B1**

**REFERENCES CITED IN THE DESCRIPTION**

**Patent documents cited in the description**

- US 6108616 A